Europäisches Patentamt

European Patent Office

Office européen des brevets

(11) Veröffentlichungsnummer: **0 509 330 A2**

# (12) EUROPÄISCHE PATENTANMELDUNG

(21) Anmeldenummer: **92105699.0**

(22) Anmeldetag: **02.04.92**

(51) Int. Cl.5: **G06F 3/06**, G11B 33/00

(30) Priorität: **15.04.91 DE 4112292**

(43) Veröffentlichungstag der Anmeldung:
**21.10.92 Patentblatt 92/43**

(84) Benannte Vertragsstaaten:
**AT BE CH DE DK ES FR GB GR IT LI LU MC NL PT SE**

(71) Anmelder: **NEC DEUTSCHLAND GmbH
Klausenburger Strasse 4
W-8000 München 80(DE)**

(72) Erfinder: **Herter, Erich
Am Reither Berg 31
W-8017 Ebersberg(DE)**

(74) Vertreter: **Betten & Resch
Reichenbachstrasse 19
W-8000 München 5(DE)**

(54) **Fester Massenspeicher für ein Datenverarbeitungs-System, Gehäuse zur Aufnahme des festen Massenspeichers und Datenverarbeitungs-System.**

(57) Ein fester Massenspeicher für ein Datenverarbeitungs-System mit einer Zentraleinheit (CPU) weist eine Interface-Einrichtung (8, 9) auf und es ist ein mit der CPU (12) verbindbares Verbindungsteil (13) vorgesehen, in das die Interface-Einrichtung des Massenspeichers steckbar ist. Dabei kann der Massenspeicher ein Festplattenspeicher (2), ein Flash-Memory-Speicher (24) oder dgl. sein.

Fig.2

EP 0 509 330 A2

Die Erfindung betrifft einen festen Massenspeicher für ein Datenverarbeitungs-System, z.B. für einen Desktop-, Laptop-, Palmtop-PC, einen Notebook-Computer oder auch für ein Telefax- oder Kopier-Gerät oder dgl., sowie ein Gehäuse zur Aufnahme des festen Massenspeichers und ein entsprechend ausgestaltetes Datenverarbeitungs-System.

Üblicherweise werden feste Massenspeicher bei Personalcomputern (PC) entweder als externe Massenspeicher oder auf einer PC-Steckkarte zur Speichererweiterung in einem PC verwendet. Diese Massenspeicher und damit auch die darauf gespeicherten Programme und Daten sind jedoch dem jeweiligen PC direkt zugeordnet und lassen sich nicht ohne weiteres transportieren.

Demgegenüber besteht die Aufgabe der Erfindung darin, den festen Massenspeicher bzw. ein Gehäuse zur Aufnahme des festen Massenspeichers bzw. das Datenverarbeitungs-System so auszugestalten, daß der feste Massenspeicher und damit die darauf gespeicherten Programme und Daten leicht transportierbar und in einem anderen Datenverarbeitungs-System verwendbar sind.

Diese Aufgabe wird dadurch gelöst, daß der feste Massenspeicher eine Interface-Einrichtung aufweist und ein mit der Zentraleinheit (CPU) verbindbares Verbindungsteil vorgesehen ist, in das die Interface-Einrichtung des Massenspeichers steckbar ist.

Damit ist es möglich, den festen Massenspeicher einfach und schnell mit einem Datenverarbeitungs-System zu verbinden.

Bei einer bevorzugten Ausführungsform der Erfindung ist der feste Massenspeicher ein Festplattenspeicher, der in eine Umhüllung einsteckbar ist, die mit dem Festplattenspeicher elektrisch verbindbar und die an ihrer Außenseite die Interface-Einrichtung des Festplattenspeichers mit Steckkontakten aufweist. Damit wird eine Festplatten-Kassette gebildet, die ohne weiteres in ein entsprechend ausgebildetes Datenverarbeitungs-System gesteckt und auch wieder herausgenommen werden kann.

Weitere vorteilhafte Ausführungsformen des erfindungsgemäßen festen Massenspeichers sind in den Ansprüchen 3 bis 16 beschrieben. Daraus ist ersichtlich, daß der erfindungsgemäße feste Massenspeicher kompakt und steckbar ausgebildet ist, so daß die an irgendeinem Ort im festen Massenspeicher gespeicherten Programme oder Daten leicht transportiert werden können. So können beispielsweise die Daten vor Ort aufgenommen werden und anschließend in dem im Büro befindlichen Datenverarbeitungs-System weiterverarbeitet werden.

Das erfindungsgemäße Datenverarbeitungs-System ist in Anspruch 17 und das erfindungsgemäße Gehäuse zur Aufnahme des festen Massenspeichers in den Ansprüchen 18 und 19 beschrieben.

Ausführungsformen der Erfindung werden anhand der Zeichnung näher beschrieben. Es zeigen:

Fig. 1 eine perspektivische Ansicht einer ersten Ausführungsform des erfindungsgemäßen Festplattenspeichers, der sich in einer Umhüllung befindet, wodurch eine erfindungsgemäße Festplatten-Kassette gebildet wird;

Fig. 2 eine schematische Schnittansicht eines mit einer CPU-Karte verbundenen Festplattenspeichers;

Fig. 3 eine perspektivische Ansicht einer zweiten Ausführungsform des erfindungsgemäßen Festplattenspeichers mit davon getrennter Elektronik;

Fig. 4 eine schematische Schnittansicht des in Fig. 3 dargestellten und mit einer CPU-Karte verbundenen Festplattenspeichers;

Fig. 5a bis 5d eine schematische Darstellung eines Desktop-, Laptop-, Palmtop-PC sowie eines Notebook-Computers, in die der erfindungsgemäße feste Massenspeicher einsteckbar ist.

Fig. 6a eine Draufsicht auf einen Verbindungschacht mit einer weiteren Ausführungsform der erfindungsgemäßen Festplattenkassette;

Fig. 6b eine Draufsicht auf einen Verbindungsschacht mit einem Flash-Memory-Speicher;

Fig. 7a eine schematische perspektivische Ansicht der in Fig. 6a dargestellten Festplattenkassette;

Fig. 7b eine schematische, perspektivische Ansicht des in Fig. 6b dargestellten Flash-Memory-Speichers;

Fig. 8 eine CPU-Steckkarte (Fig. 8a), bzw. eine Steckkarte (Fig. 8b) mit einem Verbindungsteil, in das der erfindungsgemäße feste Massenspeicher einschiebbar ist, und

Fig. 9 eine CPU-Karte mit mehreren, daran angesteckten festen Massenspeichern.

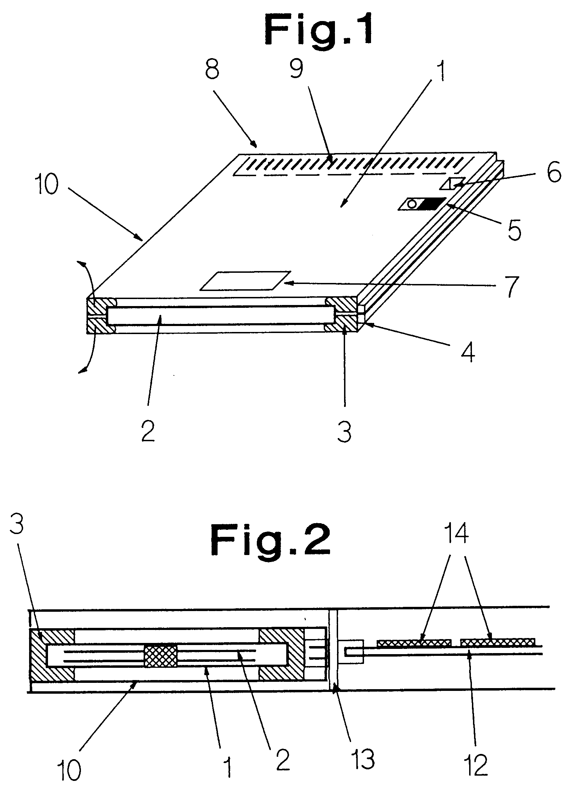

In Fig. 1 ist eine Umhüllung 1 dargestellt, in die ein Festplattenspeicher 2, z.B. eine Winchesterplatte, eingesteckt ist. Die Umhüllung 1 ist so ausgebildet, daß die vordere Öffnung in Richtung der Pfeile aufklappbar ist, so daß der Festplattenspeicher 2 leicht eingeschoben werden kann. Die Ecken der Umhüllung 1 sind vorzugsweise aus Dämpfungsmaterial 3, damit der in der Umhüllung befindliche Festplattenspeicher 2 geschützt ist. Zusätzlich dazu kann die Umhüllung ein Schloß 4 aufweisen, durch das die beiden Hälften der Umhüllung miteinander verbunden werden.

Die Umhüllung 1 kann außerdem einen Schreibschutz 5, eine software-gesteuerte Sperre 6 sowie ein Feld 7 für ein Etikett aufweisen.

Auf der der Öffnung gegenüberliegenden Querkante der Umhüllung 1 ist eine Interface-Einrichtung 8 vorgesehen, die einerseits mit dem Festplattenspeicher 2 elektrisch verbunden ist und andererseits Steckkontakte 9 aufweist.

Bei der Interface-Einrichtung 8 handelt es sich um eine Einrichtung, die einen standardisierten Datenaustausch zwischen den betreffenden Einheiten dadurch ermöglicht, daß drei Signalebenen definiert sind. Dabei handelt es sich um Signale, die

(1) die Positionssteuerung,

(2) die Antriebsmotorsteuerung (Drive-Motor-Control) und

(3) die Lese/Schreibsteuerung

betreffen.

Aus der Umhüllung 1 und der darin eingesteckte Festplattenspeicher 2 wird eine erfindungsgemäße Festplatten-Kassette 10 gebildet.

In Fig. 2 sind schematisch dargestellt: Die aus der in der Umhüllung 1 und dem darin angeordneten Festplattenspeicher 2 gebildete Festplattenkassette 10, eine CPU-Karte 12, die auch steckbar ausgebildet sein kann, sowie ein dazwischen angeordnetes Verbindungsteil 13. Dabei ist das Verbindungsteil 13 sowohl mit der Festplattenkassette 10 als auch mit der CPU-Karte 12 steckbar verbunden. Auf der CPU-Karte 12 kann ein Drive-Elektronik-Chipsatz 14 angeordnet sein.

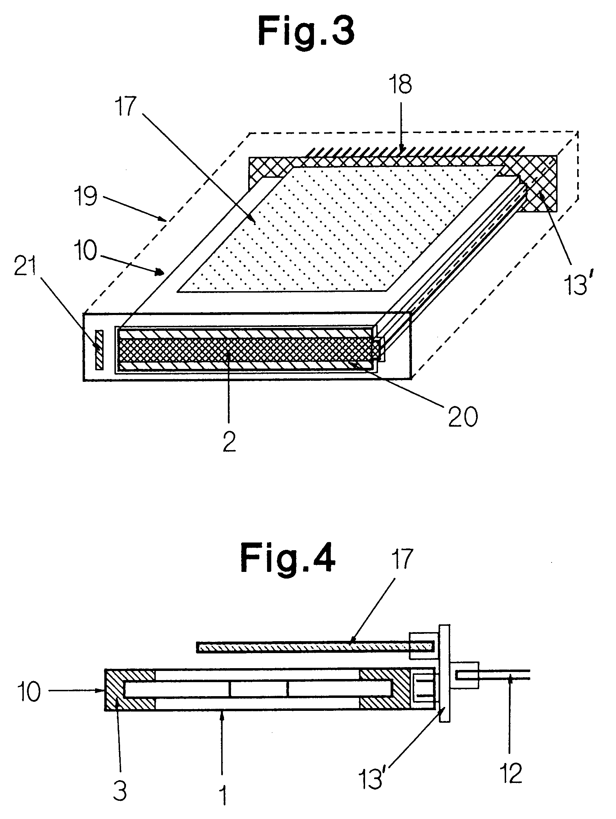

Wie am besten aus den Fig. 3 und 4 zu entnehmen ist, ist bei einer weiteren Ausführungsform der Erfindung die Elektronik für den Antrieb des Festplattenspeichers 2 auf einer separaten Steckkarte 17 angeordnet. Dabei ist das Verbindungsteil 13' so ausgebildet, daß die Steckkarte 17 für die Festplattenspeicherelektronik mit dem Verbindungsteil 13' steckbar verbunden werden kann, wie es am besten aus Fig. 4 zu ersehen ist.

In Fig. 3 ist sowohl die Festplatten-Kassette 10 als auch die Steckkarte 17 der Festplattenspeicherelektronik auf das Verbindungsteil 13' gesteckt, das Steckkontakte 18 zur Verbindung mit der CPU-Karte 12 aufweist.

Sämtliche in Fig. 3 dargestellten Bauteile können in einem teilweise in gestrichelten Linien angedeuteten Gehäuse 19 der Größenordnung eines 3 1/2-Zoll (8,89 cm) Floppy-Disk-Laufwerkgehäuse untergebracht werden, wobei z.B. ein 2 1/2-Zoll (6,35 cm), ein 1,8-Zoll (4,572 cm) oder auch ein 1,2-Zoll (3,048 cm) Festplattenspeicher in die entsprechend ausgebildete Umhüllung 1 eingesteckt werden können. Bei entsprechender Ausbildung der Umhüllung 1 können auch noch kleinere Festplattenspeicher 2 eingesteckt werden.

An der vorderen Öffnung der Festplatten-Kassette 10 können Luftöffnungen 20 für die Kühlung und ein Auswurfknopf 21 zum Auswerfen des Festplattenspeichers 2 vorgesehen sein.

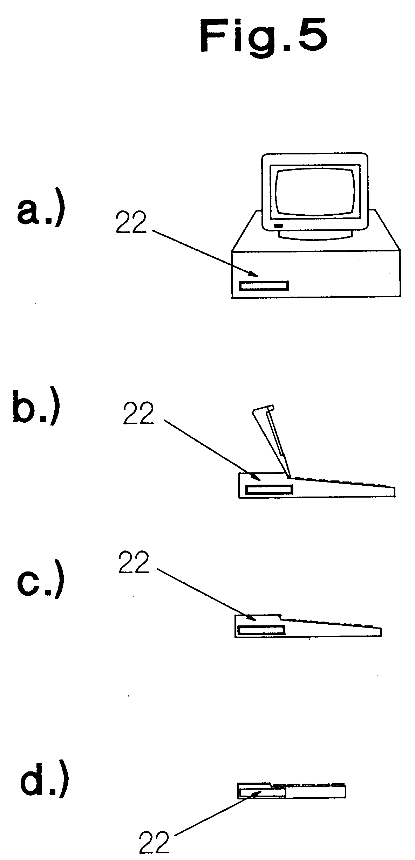

Ähnlich wie bei einer Floppy-Disk kann das Gehäuse 19 an der Gehäusewand eines Desktop-, Laptop-, Palmtop-PC oder eines Notebook-Computers so angebracht sein, daß nach außen nur ein Schlitz 22 zu sehen ist, in den die Festplatten-Kassette 10 eingesteckt wird. Dies ist in Fig. 5a bei einem Desktop-PC, in Fig. 5b bei einem Laptop-PC, in Fig. 5c bei einem Notebook-Computer und in Fig. 5d bei einem Palmtop-PC dargestellt. In gleicher Weise kann dies aber auch bei einem Telefax- oder Kopier-Gerät vorgesehen sein, das ein entsprechendes Datenverarbeitungs-System aufweist.

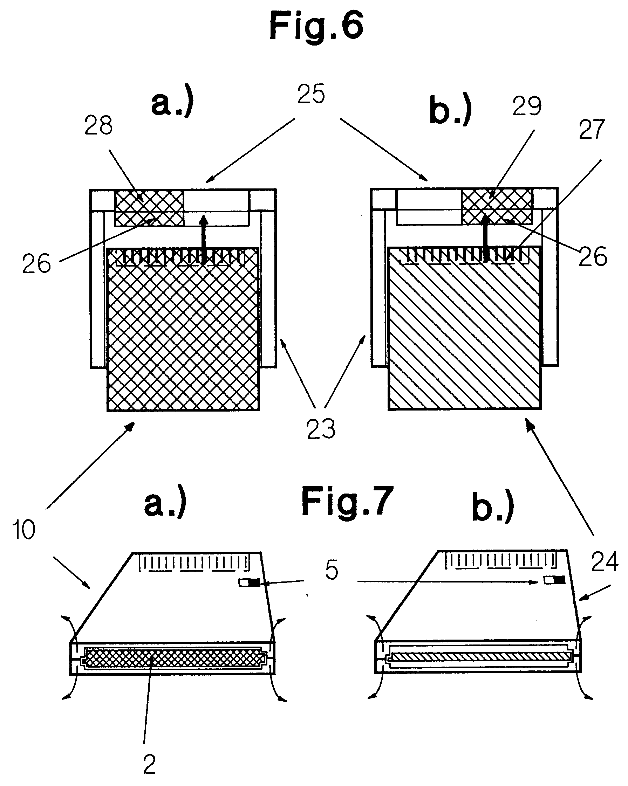

Wie aus Fig. 6 zu ersehen ist, kann als Verbindungsteil auch ein U-förmiger Verbindungsschacht 23 vorgesehen sein. Ein derartiger Verbindungsschacht ist bereits von Flash-Memory-Speichern bekannt. In Fig. 6b ist dargestellt, wie ein Flash-Memory-Speicher 24 in den Verbindungsschach 23 eingeschoben wird. Der Verbindungsschach 23 weist an seinem oberen Ende ein Schachtverbindungsteil 25 mit einer Reihe von Steckkontakten 26, vorzugsweise 68 Steckkontakten auf, die mit den Steckkontakten 27 des Flash-Memory-Speichers 24 steckbar verbunden werden können. Die Steckkontakte 26 sind so ausgestaltet, daß sie die oben beschriebenen drei Signalebenen anbieten, so daß ein standardisierter Datenaustausch möglich ist.

Wie aus Fig. 6a zu ersehen ist, ist bei einer weiteren Ausführungsform der Erfindung die aus der Umhüllung 1 und dem Festplattenspeicher 2 bestehende Festplatten-Kassette 10 so ausgebildet, daß sie in den Verbindungsschacht 23 eingeschoben und die Steckkontakte 9 in die Steckkontakte 26 des Schachtverbindungsteils 25 eingesteckt werden können.

Dabei können von den 68 Steckkontakten 26 des Schachtverbindungsteils 25 ein Teil 28 für die Verbindung mit der Festplattenkassette 10 und ein Teil 29 für die Verbindung mit dem Flash-Memory-Speicher 24 bestimmt sein, so daß wahlweise Festplatten-Kassette 10 oder Flash-Memory-Speicher 24 in den Verbindungsschacht eingesteckt werden können.

Fig. 7a zeigt eine perspektivische Darstellung der Festplatten-Kassette 10, die in Richtung der Pfeile aufgeklappt werden kann, so daß der Festplattenspeicher 2 leicht in die Umhüllung 1 eingesteckt oder daraus herausgenommen werden kann. In gleicher Weise ist in Fig. 7b in perspektivischer Darstellung ein Flash-Memory-Speicher 24 dargestellt.

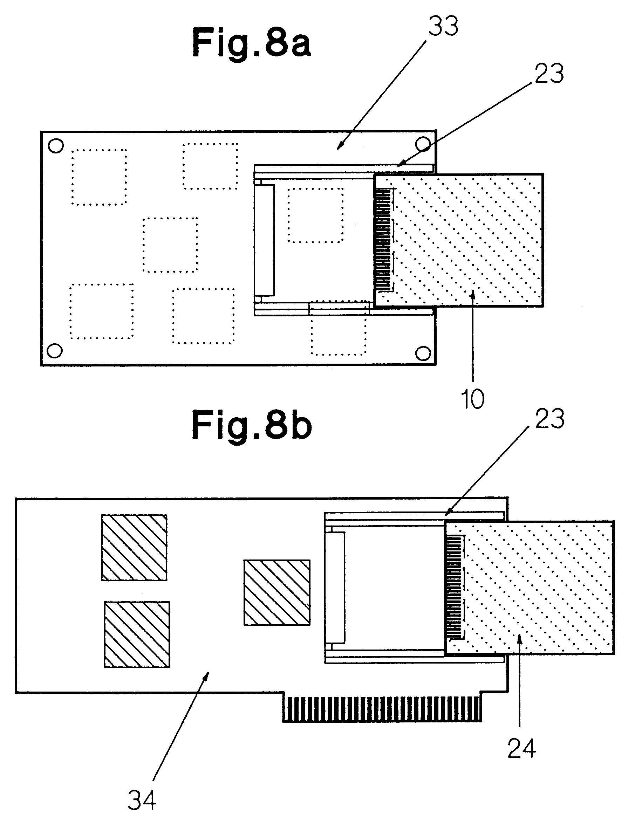

Der Verbindungsschacht 23, in den wahlweise eine Festplatten-Kassette 10 oder ein Flash-Memory-Speicher 24 eingeschoben werden können, kann auf einer Platine oder einer Karte, die auch steckbar sein kann, angebracht sein. So zeigt Fig. 8a eine Platine 33 für einen Palmtop-PC oder einen Notebook-Computer, auf der der Verbindungsschacht 23 angebracht ist. In den Verbindungsschacht 23 können entweder die Festplatten-Kassette 10 oder der Flash-Memory-Speicher 24 eingeschoben werden. In der dargestellten Ausführungsform ist es eine Festplatten-Kassette 10.

Fig. 8b zeigt eine Bilddatenkompressions-Steckkarte 34, auf der Verbindungsschacht 23 angebracht ist. In den Verbindungsschacht 23 können entweder die Festplatten-Kassette 10 oder der Flash-Memory-Speicher 24 eingeschoben werden. In der dargestellten Ausführungsform ist es ein Flash-Memory-Speicher 24.

Die weiteren Bauteile auf der Platine 33 bzw. der Steckkarte 34 sind nur schematisch angedeutet.

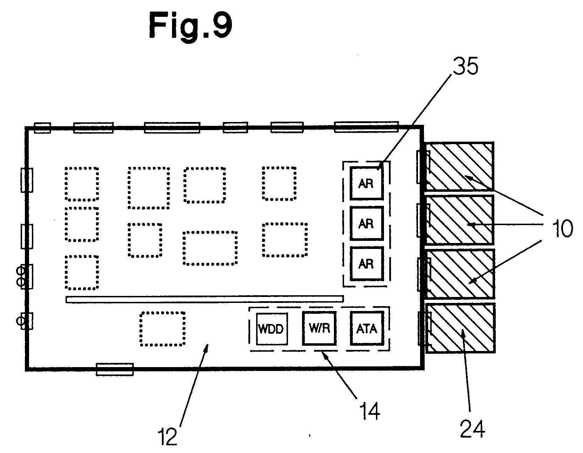

In Fig. 9 ist eine weitere Ausführungsform der Erfindung dargestellt. Dabei sind an der rechten Kante der CPU-Karte 12 mehrere Verbindungsteile 13, 13' bzw. Verbindungsschächte 23 vorgesehen, in die jeweils eine Festplatten-Kassette 10 oder ein Flash-Memory-Speicher 24 eingesteckt werden können. Dabei sind auf der CPU-Karte entsprechende Array-Controller (AR) 35 vorgesehen, durch die die Festplattenspeicher und die Flash-Memory-Speicher angesteuert werden können. Auch hier sind die weiteren Bauteile auf der CPU-Karte nur schematisch angedeutet.

Weitere Ausgestaltungen der beschriebenen Ausführungsformen sind für den Fachmann ohne weiteres möglich und fallen in den Rahmen der Erfindung. So können selbstverständlich die genannten Bauteile auch noch anderweitig miteinander kombiniert werden.

## Patentansprüche

1. Fester Massenspeicher für ein Datenverarbeitungs-System mit einer Zentraleinheit (CPU),
dadurch gekennzeichnet,
daß der feste Massenspeicher (2, 24) eine Interface-Einrichtung (8, 9; 26) aufweist und ein mit der CPU (12) verbindbares Verbindungsteil (13, 13'; 23) vorgesehen ist, in das die Interface-Einrichtung des Massenspeichers steckbar ist.

2. Fester Massenspeicher nach Anspruch 1,
dadurch gekennzeichnet,
daß der feste Massenspeicher ein Festplattenspeicher (2) ist, der in eine Umhüllung (1) einsteckbar ist, die mit dem Festplattenspeicher (2) elektrisch verbindbar ist und die an ihrer Außenseite die Interface-Einrichtung (8, 9) des Festplattenspeichers aufweist.

3. Fester Massenspeicher nach Anspruch 2,
dadurch gekennzeichnet,
daß die Interface-Einrichtung (8, 9) des Festplattenspeichers (2) an der der Einstecköffnung der Umhüllung (1) gegenüberliegenden Querkante angebracht ist und Steckkontakte (9) aufweist.

4. Fester Massenspeicher nach einem der Ansprüche 1 bis 3,
dadurch gekennzeichnet,
daß die Interface-Einrichtung (8, 9) eine standardisierte Schnittstelle mit mindestens drei Signalebenen aufweist.

5. Fester Massenspeicher nach Anspruch 4,
dadurch gekennzeichnet,
daß die folgenden Signalebenen definiert sind:
  (1) Positionssteuerung,
  (2) Antriebsmotorsteuerung (Drive-Motor-Control) und
  (3) Lese/Schreibsteuerung.

6. Fester Massenspeicher nach einem der Ansprüche 1 bis 5,
dadurch gekennzeichnet,
daß die Umhüllung (1) die Größe des Gehäuses eines 3 1/2-Zoll (8,89 cm) Floppy-Disk-Laufwerks hat und in die Umhüllung Festplattenspeicher mit einer Größe von 2 1/2-Zoll (6,35 cm), 1,8-Zoll (4,572 cm), 1,2-Zoll (3,048 cm) oder kleiner einsteckbar sind.

7. Fester Massenspeicher nach Anspruch 1,
dadurch gekennzeichnet,
daß der feste Massenspeicher ein Flash-Memory-Speicher (24) ist.

8. Fester Massenspeicher nach einem der Ansprüche 1 bis 7,
dadurch gekennzeichnet,
daß das Verbindungsteil (23) U-förmig ausgebildet ist und der Massenspeicher in den zwischen den beiden U-Schenkeln ausgebildeten Schacht einsteckbar bzw. einschiebbar ist.

9. Fester Massenspeicher nach Anspruch 8,
dadurch gekennzeichnet,
daß das Verbindungsteil (23) das übliche Verbindungsteil eines Flash-Memory-Speichers
mit vorzugsweise 68 Kontaktstiften ist.

10. Fester Massenspeicher nach Anspruch 8,
dadurch gekennzeichnet,
daß die Interface-Einrichtung (8, 9) des Festplattenspeichers so ausgebildet ist, daß es die
vom Flash-Memory-Speicher nicht genutzten
Kontaktstifte (28) des Verbindungsteils (23)
nutzt.

11. Fester Massenspeicher nach Anspruch 10,
dadurch gekennzeichnet,
daß Festplattenspeicher (2) und Flash-
Memory-Speicher (24) wahlweise in das Verbindungsteil (23) einsteckbar sind.

12. Fester Massenspeicher nach einem der Ansprüche 1 bis 11,
dadurch gekennzeichnet,
daß das Verbindungsteil (23) auf einer der beiden Längsoberflächen einer Steckkarte (12,
33, 34) angebracht ist.

13. Fester Massenspeicher nach einem der Ansprüche 1 bis 11,
dadurch gekennzeichnet,
daß die CPU-Steckkarte (12) an einer ihrer
beiden Querkanten eine Interface-Einrichtung
aufweist, die mit dem Verbindungsteil (23)
steckbar verbunden ist.

14. Fester Massenspeicher nach einem der Ansprüche 1 bis 6, 12 oder 13,
dadurch gekennzeichnet,
daß die Elektronik des Festplattenspeichers (2)
auf einer vom Festplattenspeicher (2) getrennten Steckkarte (17) angebracht ist, die in das
Verbindungsteil (13') steckbar ist.

15. Fester Massenspeicher nach einem der Ansprüche 1 bis 14,
dadurch gekennzeichnet,
daß das Datenverarbeitungs-System ein Computer ist.

16. Fester Massenspeicher nach einem der Ansprüche 1 bis 15,
dadurch gekennzeichnet,
daß das Datenverarbeitungs-System Teil eines
Bürogeräts ist, insbesondere eines Telefax-,
eines Kopier-Gerätes oder dgl.

17. Datenverarbeitungs-System mit einer Zentraleinheit, mindestens einem festen Massenspeicher sowie mindestens einem Verbindungsteil
nach einem der Ansprüche 1 bis 16.

18. Gehäuse zur Aufnahme des festen Massenspeichers nach einem der Ansprüche 1 bis 16,
dadurch gekennzeichnet,
daß an der einen Querkante des Gehäuses
(19) das Verbindungsteil (13, 13') angeordnet
und an der dazu gegenüberliegenden Querkante eine Öffnung zum Einstecken des festen
Massenspeichers (2) vorgesehen ist.

19. Gehäuse nach Anspruch 18,
dadurch gekennzeichnet,
daß es in die Gehäusewand des Datenverarbeitungssystems so einschiebbar ist, daß die
Gehäuseöffnung in der Gehäusewand des Datenverarbeitungssystems einen Schlitz (22) bildet, in den der feste Massenspeicher von außen einsteckbar ist.

# Fig.1

# Fig.2

# Fig.3

# Fig.4

# Fig.5

a.)    22

b.)    22

c.)    22

d.)    22

# Fig.6

# Fig.7

# Fig.8a

# Fig.8b

# Fig.9